# EUROPÄISCHE PATENTSCHRIFT

(11) **EP 0 623 772 B1**
(45) Veröffentlichungstag und Bekanntmachung des Hinweises auf die Patenterteilung: **20.09.2000**
(21) Anmeldenummer: 94103772.3
(22) Anmeldetag: 11.03.1994
(51) Int. Cl.: F16K 31/06

(54) **Elektromagnetisch betätigbares Ventil**
Solenoid valve
Electrovanne

(30) Priorität: 06.05.1993 DE 4315013
(43) Veröffentlichungstag der Anmeldung: 09.11.1994
(73) Patentinhaber: Firma Carl Freudenberg, 69469 Weinheim (DE)
(72) Erfinder: Sausner, Andreas, D-63263 Neu Isenburg (DE); Knapp, Stefan, D-69483 Wald-Michelbach (DE)

(56) Entgegenhaltungen:
- EP-A- 0 099 771
- US-A- 3 013 768
- US-A- 5 127 624
- PATENT ABSTRACTS OF JAPAN vol. 17, no. 330 (M-1434) 23. Juni 1993 & JP-A-05 039 882 (MITSUBISHI ELECTRIC CORP) 19. Februar 1993
- PATENT ABSTRACTS OF JAPAN vol. 14, no. 510 (M-1045) 8. November 1990 & JP-A-02 209 683 (MITSUBISHI ELECTRIC CORP) 21. August 1990

## Beschreibung

Die Erfindung befaßt sich mit einem elektromagnetisch betätigbaren Ventil gemäß Oberbegriff des Patentanspruchs 1.

Aus EP-A-0 099 771 A1 ist ein elektromagnetisch betätigbares Ventil der vorstehend genannten Art bekannt. Hierbei ist die Durchbrechung im Magnetanker zylindrisch ausgebildet. Beim Auftreten von Unterdruck im Bereich des Ventilsitzes ist es daher möglich, daß sich der Dichtkörper aus elastomerem Werkstoff von dem metallischen Werkstoff des Magnetankers abheben kann.

Ferner ist es aus JP-A-2 209 683 bekannt, zwischen einem Dichtkörper und einem Magnetanker bei elektromagnetisch betätigten Ventilen eine formschlüssige Verbindung vorzusehen. Demgegenüber liegt der Erfindung die Aufgabe zugrunde, ein elektromagne

tisch betätigbares Ventil bereitzustellen, welches fertigungstechnisch einfacher und kostengünstiger herstellbar ist und bei dem ein Abheben des Dichtkörpers aus elastomerem Werkstoff von dem metallischen Werkstoff des Magnetankers bei auftretendem Unterdruck im Bereich des Ventilsitzes zuverlässig verhindert wird.

Nach der Erfindung wird hierzu ein elektromagnetisch betätigbares Ventil bereitgestellt, dessen Merkmal im Patentanspruch 1 angegeben sind.

Weitere vorteilhafte Ausgestaltungen der Erfindung sind in den Ansprüchen 2 bis 5 wiedergegeben.

Bei dem erfindungsgemäßen elektromagnetisch betätigbaren Ventil sind der Magnetanker und der Dichtkörper formschlüssig miteinander verbunden. Hierbei wird eine axiale Relativbewegung des Dichtkörpers oder ein Ablösen des Elastomers vom metallischen Werkstoff des Magnetankers verhindert. Durch die formschlüssige Verbindung der beiden Teile miteinander ist die Verwendung eines Haftvermittlers entbehrlich, wodurch sich derartige Ventile kostengünstig und einfach fertigen lassen. Der Magnetanker weist hierzu auf seiner Stirnseite einen sich außenumfangsseitig erstreckenden, nutförmigen Hinterschnitt auf, und der Hinterschnitt und der Dichtkörper sind in Eingriff miteinander. Hierdurch wird während der gesamten Gebrauchsdauer eine sichere und zuverlässige Festlegung des Dichtkörpers gewährleistet. Der Hinterschnitt ist der Berührungsfläche zwischen dem Dichtkörper und dem Ventilsitz in axialer Richtung unmittelbar benachbart zugeordnet, so daß eine exakte, ortsfeste Fixierung des Dichtkörpers relativ zum Magnetanker gewährleistet ist und ein sich verändernder Öffnungsquerschnitt des Ventils durch eine axiale Verlagerung des Dichtkörpers in Bezug auf den Ventilsitz sicher ausgeschlossen werden kann. Der Dichtkörper und/oder der Hinterschnitt können beispielsweise derart ausgestaltet sein, daß die beiden Teile ineinander einschnappen. Zusätzlich zu dem nutförmigen Hinterschnitt des Magnetankers ist die Durchbrechung von der dem Ventilsitz zugewandten Stirnseite des Magnetankers ausgehend in ihrem Querschnitt konisch erweitert, wodurch sich die Positionierung und Festlegung des Dichtkörpes am metallischen Werkstoff des Magnetankers weiter verbessern läßt. Auch bei auftretendem Unterdruck im Bereich des Ventilsitzes kann sich der Elastomerwerkstoff vom metallischen Werkstoff nicht abheben.

Der bei der Auslegungsform des elektromagnetisch betätigbaren Ventils nach Anspruch 2 vorgesehene Anschlagpuffer bewirkt eine Endlagendämpfung bei Bewegungen des Magnetankers in die Offenstellung des Ventils und verhindert dadurch Anschlaggeräusche. Der Elastomerwerkstoff von Dichtkörper und Anschlagpuffer kann in einem Arbeitsgang einseitig in die Durchbrechung eingespritzt werden.

Die Eintiefungen bei der Ausgestaltungsform des elektromagnetisch betätigbaren Ventils nach Anspruch 3 bewirken eine mechanische Verkrallung mit dem Elastomerwerkstoff, welcher die Durchbrechung durchdringt. Die Eintiefungen können beispielsweise durch Drehen hergestellt werden.

Bei der Ausgestaltung des elektromagnetisch betätigbaren Ventils nach Anspruch 4 ergibt sich der Vorteil, daß der Werkstoff einerseits nur geringe Relaxationserscheinungen während der gesamten Gebrauchsdauer aufweist und somit relativ unbeweglich am metallischen Werkstoff des Magnetankers befestigt ist, und andererseits erhält man eine gute Abdichtung des Ventils.

Die Erfindung wird nachstehend an Hand einer bevorzugten Ausführungsform unter Bezugnahme auf die beigefügte Zeichnung näher erläutert, das eine Ausschnittsansicht einer bevorzugten Ausführungsform eines elektromagnetisch betätigbaren Ventils nach der Erfindung zeigt.

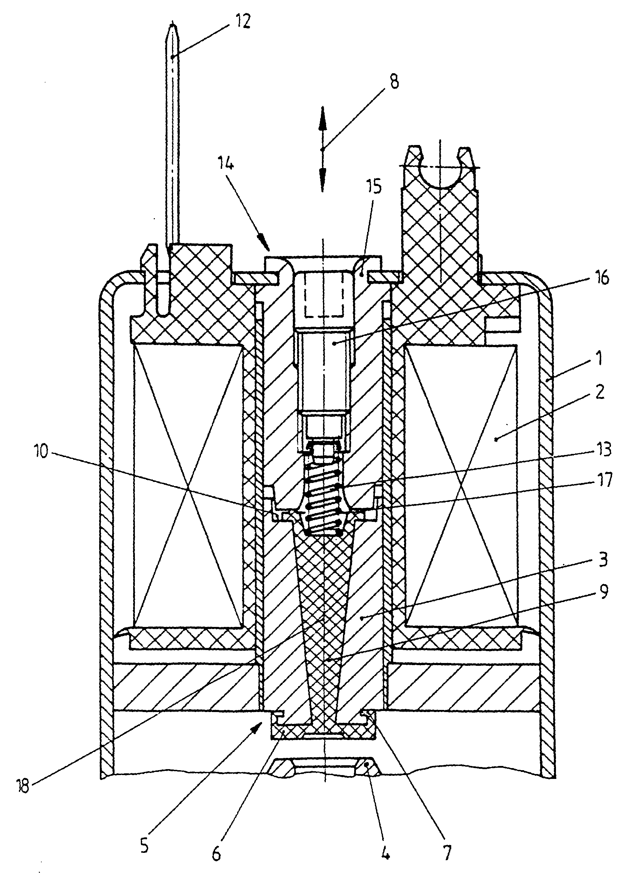

In der Figur. 1 ist ein Ausschnitt einer elekromagnetisch betätigbaren Ventils gezeigt, das von einem Gehäuse 1 umschlossen ist. Das Ventil umfaßt eine ringförmige Magnetspule 2, die über einen Anschluß 12 strombeaufschlagbar ist. Die Magnetspule 2 umschließt außenumfangsseitig einen hin- und herbewegbaren Magnetanker 3, der im Bereich seiner vom einlag Dichtkörper 6 abgewandten Stirnseite 10 durch eine Schraubendruckfeder 13 an einem Widerlager 14 abgestützt ist. Der Magnetanker 3 ist auf der dem Ventilsitz 4 zugewandten Seite mit dem Dichtkörper 6 versehen, der bedarfsweise mit dem Ventilsitz 4 in Eingriff bringbar ist. Das Widerlager 14 ist in diesem Ausführungsbeispiel zweiteilig ausgebildet und besteht aus einer Halterung 15, die ortsfest mit dem Gehäuse 1 verbunden ist und der Schraube 16, die als Stelle lement ausgebildet ist. Die Schraubendruckfeder 13 wird im Bereich der von dem Dichtkörper 6 abgewandten Stirnseite 10 außenseitig geführt. Die Vertiefung des Magnetankers 3 auf der der Schraubendruckfeder 13 zugewandten Seite ist mit dem elastomeren Werkstoff, der die Durchbrechung 9 ausfüllt, versehen. In Richtung der Halterung 15 ist der elastomere Werkstoff mit einstückig angeformten Anschlagputtern 17 versehen, die zur Endlagendämpfung vorgesehen sind. Die Durchbrechung 9 des Magnetankers 3 ist vollständig mit elastomerem Werkstoff ausgefüllt.

Ausgehend von dem in einen Hinterschnitt 7 eingeschnappten Dichtkörper 6 ist die Durchbrechung 9 mit einem sich in Richtung der Schraubendruckfeder 13 kontinuierlich erweiternden, konischen Querschnitt versehen. Der Winkel, den die Oberfläche der Durchbrechung 9 mit der Achse des Magnetankers 3 einschließt, beträgt in diesem Ausführungsbeispiel 5°. Sind die Vorspannkräfte der Schraubendruckfeder 13 größer als in dem hier gezeigten Ausführungsbeispiel, kann der Winkel davon abweichend größer gewählt werden.

Bei dem gezeigten Ausführungsbeispiel sind der Magnetanker 3 und der Dichtkörper 6 formschlüssig miteinander verbunden, ebenso wie der elastomere Werkstoff innerhalb der Durchbrechung 9. Durch diese Ausge staltung ist eine adhäsive Verbindung des Gummimetallteils entbehrlich, was sowohl in fertigungstechnischer als auch in wirtschaftlicher Hinsicht von hervorzuhebender Bedeutung ist.

## Patentansprüche

1. Elektromagnetisch betätigbares Ventil, umfassend eine in einem Gehäuse (1) angeordnete, ringförmig ausgebildete Magnetspule (2), die einen in axialer Richtung der Magnetspule (2) hin- und herbewegbaren Magnetanker (3) aus metallischem Werkstoff umschließt, wobei der Magnetanker (3) auf der dem Ventilsitz (4) zugewandten Stirnseite (5) mit einem Dichtkörper (6) aus elastomerem Werkstoff versehen und von einer sich in Bewegungsrichtung (8) erstreckenden Durchbrechung (9) durchdrungen ist, die vom elastomeren Werkstoff des Dichtkörpers (6) vollständig ausgefüllt ist, und wobei der Magnetanker (3) auf seiner Stirnseite (5) einen sich außenumfangsseitig erstreckenden, nutförmigen Hinterschnitt (7) aufweist und der Hinterschnitt (7) und der Dichtkörper (6) miteinander in Eingriff sind **dadurch gekennzeichnet,** daß die Durchbrechung (9) von der dem Ventilsitz (4) zugewandten Stirnseite (5) des Magnetankers (3) ausgehend, in ihrem Querschnitt konisch erweitert ist.

2. Ventil nach Anspruch 1, **dadurch gekennzeichnet,** daß der elastomere Werkstoff auf der dem Dichtkörper (6) abgewandten Stirnseite (10) des Magnetankers (3) einen Anschlagpuffer (17) bildet.

3. Ventil nach einem der Ansprüche 1 oder 2, **dadurch gekennzeichnet,** daß der Magnetanker (3) im Bereich der Durchbrechung (9) mit Eintiefungen versehen ist, die eine Tiefe von 0,5 bis 3,0 mm aufweisen.

4. Ventil nach einem der Ansprüche 1 bis 3, **dadurch gekennzeichnet,** daß der elastomere Werkstoff des Dichtkörpers (9) eine Härte Shore A von 40 bis 100 aufweist.

5. Ventil nach einem der Ansprüche 1 bis 4, **dadurch gekennzeichnet,** daß die die Durchbrechung (9) begrenzende Oberfläche mit der Achse des Magnetankers einen Winkel von 5° bis 30° einschließt.

## Claims

1. An electromagnetically actuable valve comprising a magnet coil (2) of annular design, which is arranged in a housing (1) and surrounds a magnet armature (3) of metallic material which can be moved backwards and forwards in the axial direction of the magnet coil (2), the magnet armature (3) being provided, on the end (5) facing the valve seat (4), with a sealing body (6) of elastomeric material and being penetrated by an aperture (9) which extends in the direction of movement (8) and is completely filled by the elastomeric material of the sealing body (6), and the magnet armature (3) having on its end (5) a groove-shaped undercut (7) which extends around the outer periphery, and the undercut (7) and the sealing body (6) being in engagement, characterized in that the cross section of the aperture (9) widens conically from that end (5) of the magnet armature (3) which faces the valve seat (4).

2. A valve according to claim 1, characterized in that the elastomeric material forms a stop buffer (17) on that end (10) of the magnet armature (3) which faces away from the sealing body (6).

3. A valve according to either of claims 1 and 2, characterized in that, in the region of the aperture (9), the magnet armature (3) is provided with depressions which have a depth of 0.5 to 3.0 mm.

4. A valve according to any of claims 1 to 3, characterized in that the elastomeric material of the sealing body (9) has a Shore A hardness of 40 to 100.

5. A valve according to any of claims 1 to 4, characterized in that the surface bounding the aperture (9) encloses an angle of 5° to 30° with the axis of the magnet armature.

## Revendications

1. Electrovanne comprenant une bobine magnétique (2) de forme annulaire située dans un carter (1) et qui entoure une armature d'aimant (3) faite d'un matériau métallique et pouvant effectuer un mouvement de va-et-vient dans la direction axiale de la bobine magnétique (2), l'armature d'aimant (3) étant pourvue, sur le côté frontal (5) tourné vers le siège de soupape (4), d'un corps étanche (6) fait d'une matière élastomère et étant traversée par une découpure (9) qui s'étend dans la direction de déplacement (8) et qui est totalement remplie par la matière élastomère du corps étanche (6), et l'armature d'aimant (3) étant pourvue, sur son côté frontal (5), d'une contre-dépouille (7) en forme de gorge qui s'étend sur le côté de sa circonférence externe et la contre-dépouille (7) et le corps étanche (6) étant en contact l'un avec l'autre, caractérisé en ce que la section de la découpure (9) s'évase du coté frontal (5) tourné vers le siège de soupape (4) de l'armature d'aimant (3).

2. Vanne selon la revendication 1, caractérisée en ce que la matière élastomère forme un tampon de butée (17) sur le côté frontal (10) de l'armature d'aimant (3) éloigné du corps étanche (6).

3. Vanne selon l'une des revendications 1 ou 2, caractérisée en ce que l'armature d'aimant (3) est pourvue, dans la région de la découpure (9), de creux mesurant de 0,5 à 3,0 mm de profondeur.

4. Vanne selon l'une des revendications 1 à 3, caractérisée en ce que la matière élastomère du corps étanche (9) a une dureté Shore A comprise entre 40 et 100.

5. Vanne selon l'une des revendications 1 à 4, caractérisée en ce que la surface limitant la découpure (9) forme avec l'axe de l'armature d'aimant un angle de 5° à 30°.
